(19) Europäisches Patentamt
European Patent Office
Office européen des brevets

(11) **EP 3 077 650 B1**

(12) **EUROPÄISCHE PATENTSCHRIFT**

(45) Veröffentlichungstag und Bekanntmachung des Hinweises auf die Patenterteilung:
**08.01.2025  Patentblatt 2025/02**

(21) Anmeldenummer: **14805508.0**

(22) Anmeldetag: **18.11.2014**

(51) Internationale Patentklassifikation (IPC):
*F02D 41/14* (2006.01)   *F01N 13/00* (2010.01)
*F02D 41/22* (2006.01)   *F01N 11/00* (2006.01)

(52) Gemeinsame Patentklassifikation (CPC):
**F02D 41/222; F01N 11/00; F01N 13/008;**
**F02D 41/1444; F02D 41/1494;** F01N 2560/20;
F01N 2900/0416; Y02T 10/40

(86) Internationale Anmeldenummer:
**PCT/EP2014/074863**

(87) Internationale Veröffentlichungsnummer:
**WO 2015/082208 (11.06.2015 Gazette 2015/23)**

(54) **VERFAHREN ZUR ÜBERWACHUNG EINES ABGASSENSORS**

METHOD FOR MONITORING AN EXHAUST SENSOR

PROCÉDÉ DE SURVEILLANCE D'UN CAPTEUR DE GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 05.12.2013  DE 102013225050
17.11.2014  DE 102014223444

(43) Veröffentlichungstag der Anmeldung:
**12.10.2016  Patentblatt 2016/41**

(73) Patentinhaber: **Robert Bosch GmbH**
**70442 Stuttgart (DE)**

(72) Erfinder:
• **DI MIRO, Ariel**
**70327 Stuttgart (DE)**
• **STOJICEVIC, Dorde**
**70736 Fellbach (DE)**
• **SEYFANG, Robert**
**74379 Ingersheim (DE)**
• **ROETZLER, Bastian**
**71706 Markgroeningen (DE)**

(56) Entgegenhaltungen:
DE-A1- 102008 040 593    DE-A1- 102009 003 091
DE-A1- 102009 028 288    DE-A1- 102010 027 975
DE-A1- 102011 002 502    DE-A1- 102011 088 296
DE-A1- 19 636 415        DE-B4- 102007 034 251

# EP 3 077 650 B1

**Beschreibung**

Stand der Technik

Die Erfindung betrifft ein Verfahren zur Überwachung eines Abgassensors bei dem überwacht wird, ob mindestens ein überwachtes Ereignis eingetreten ist. Beispiele für derartige Ereignisse sind beispielsweise das Verstopfen eines Zutrittswegs des Abgases zu dem Abgassensor oder das Eintauchen des Abgassensors in eine Flüssigkeit.
Aus dem Stand der Technik schon bekannte diesbezügliche Verfahren stützen sich bestenfalls auf erfahrungsbasierte Algorithmen und sind somit in bestimmten Situationen entsprechend fehlerbehaftet.

Offenbarung der Erfindung

Die vorliegende Erfindung sieht im Gegensatz dazu ein Verfahren zur Überwachung eines Abgassensors vor, bei dem durch Auswertung von mindestens einer dem Abgassensor in einem Zeitraum zugeführten und/oder dem Abgassensor in dem Zeitraum entzogenen Wärmemenge, insbesondere unter Berücksichtigung einer während dem Zeitraum erfolgenden Änderung der durch den Abgassensor gespeicherten Wärmemenge, festgestellt wird, ob mindestens ein überwachtes Ereignis eingetreten ist.
Auf diese Weise ist sichergestellt, dass der Abgassensor und seine Umgebung auf der Basis relevanter physikalischer Größen richtig modelliert werden und somit das Auftreten des mindestens einen überwachten Ereignisses sicher festgestellt werden kann.
Bei dem überwachten Ereignis handelt es sich um ein Ereignis das mit einer thermischen Einwirkung auf den Abgassensor, wie einer verminderten oder erhöhten Wärmeabfuhr, einhergeht. Beispielsweise kann es sich um eine Verstopfung einer Gaszutrittsöffnung des Abgassensors mit einem festen Medium handeln oder um eine Überflutung des Abgassensors mit einem flüssigen Medium, wie sie beispielsweise bei einer Watfahrt eines Kraftfahrzeugs mit Verbrennungsmotor auftreten kann.
Erfindungsgemäß ist vorgesehen, dass die Auswertung anhand einer Energiebilanzgleichung oder anhand des Energieerhaltungssatzes erfolgt.
Hierbei ist eine Berücksichtigung einer während dem Zeitraum erfolgenden Änderung der durch den Abgassensor gespeicherten Wärmemenge vorgesehen.
Die Erfassung der durch den Abgassensor gespeicherten Wärmemenge erfolgt erfindungsgemäß durch eine von dem Abgassensor umfasste Einrichtung zur Temperaturmessung. Beispielsweise kann hierzu ein elektrischer Gleichstrom- und/oder Wechselstromwiderstand des Abgassensors gemessen werden.
Die dem Abgassensor zugeführten und/oder entzogenen Wärmemengen lassen sicherfindungsgemäß aus weiteren gemessenen Größen, insbesondere unter Zugrundelegung entsprechender Modelle und/oder Datensätze, ermitteln bzw. berechnen. Derartige Größen umfassen erfindungsgemäß die Abgassensortemperatur und können ferner folgende sein: Die Umgebungstemperatur, eine Strömungsgeschwindigkeit in der Umgebung, die chemische Zusammensetzung der Umgebung, eine Stärke und ein zeitlicher Verlauf eines den Abgassensor durchfließenden elektrischen Stroms und Betriebsbedingungen einer Brennkraftmaschine, in dessen Abgastrakt der Abgassensor angeordnet ist.
Diese Größen können dabei entweder separat gemessen werden oder wiederum aus anderen Größen, beispielsweise bereits bekannten Betriebsgrößen einer Brennkraftmaschine, ermittelt werden.
Erfindungsgemäß handelt es sich bei den dem Abgassensor zugeführten und/oder entzogenen Wärmemengen um:

- Eine Heizleistung einer elektrischen Heizeinrichtung des Abgassensors. Sie kann beispielsweise aus einer effektiv angelegten Heizerspannung und einem Heizerwiderstand berechnet werden. Der Heizerwiderstand kann dabei wiederum in Abhängigkeit von der Abgassensortemperatur berücksichtigt werden.

- Eine Wärmeableitung zwischen dem Abgassensor und seiner Umgebung. Bei der Umgebung kann es sich beispielsweise um die Wand einer Abgasleitung handeln, in der der Abgassensor montiert ist. Es kann beispielsweise davon ausgegangen werden, dass die Wärmableitung zwischen dem Abgassensor und seiner Umgebung eine Funktion der Temperatur des Abgassensors und der Umgebungstemperatur ist. Beispielsweise kann davon ausgegangen werden, dass die Wärmeableitung zwischen dem Abgassensor und seiner Umgebung eine Funktion der Temperaturdifferenz ist.

- Eine Wärmekonvektion zwischen dem Abgassensor und seiner Umgebung. Bei der Umgebung kann es sich beispielsweise um das Abgas in einer Abgasleitung handeln, in der der Abgassensor montiert ist. Es kann beispielsweise davon ausgegangen werden, dass die Wärmekonvektion zwischen dem Abgassensor und seiner Umgebung eine Funktion der Temperatur des Abgassensors und der Umgebungstemperatur sowie der Strömungsgeschwindigkeit eines Gases der Umgebung ist.

- Eine Wärmestrahlung zwischen dem Abgassensor und seiner Umgebung. Bei der Umgebung kann es sich beispielsweise um die Wand einer Abgasleitung handeln, in der der Abgassensor montiert ist. Es kann beispielsweise davon ausgegangen werden, dass die Wärmestrahlung zwischen dem Abgassensor und seiner Umgebung eine Funktion der Temperatur des Abgassensors und der Umgebungstemperatur ist.

Die so ermittelten Wärmemengen werden erfindungsgemäß unter der Annahme ermittelt werden, dass das zu überwachende Ereignis momentan nicht auftritt bzw. im zurückliegenden Zeitintervall nicht aufgetreten ist.

Es ist ferner erfindungsgemäß vorgesehen, die dem Abgassensor zugeführten bzw. entzogenen Wärmemengen, wobei eine eventuelle Heizleistung aber unberücksichtigt bleibt, unter Berücksichtigung einer Änderung der durch den Abgassensor gespeicherten Wärmemenge mit der Heizleistung der elektrischen Heizeinrichtung des Abgassensors zu vergleichen. Auf Basis dieses Vergleiches wird dann erfindungsgemäß geschlossen, ob das mindestens eine überwachte Ereignis eingetreten ist.

Die Auswertung kann zum Ergebnis haben, dass momentan oder im zurückliegenden Zeitintervall die elektrische Heizleistung größer ist als die Summe der berücksichtigten Wärmeflüsse zuzüglich der berücksichtigten Änderung der im Abgassensor gespeicherten Wärmeenergie. In diesem Fall existiert also eine zusätzliche Auskühlung des Abgassensors. In diesem Fall kann beispielsweise auf eine Überflutung des Abgassensors geschlossen werden.

Die Auswertung kann zum Ergebnis haben, dass momentan oder im zurückliegenden Zeitintervall die elektrische Heizleistung kleiner ist als die Summe der berücksichtigten Wärmeflüsse zuzüglich der berücksichtigten Änderung der im Abgassensor gespeicherten Wärmeenergie. Das bedeutet, dass momentan oder im zurückliegenden Zeitintervall die den Abgassensor auskühlenden Effekte überbewertet sind, das heißt, eine an sich zu erwartende Auskühlung des Abgassensors nicht auf. In diesem Fall kann beispielsweise darauf geschlossen werden, dass eine Verstopfung einer Gaszutrittsöffnung des Abgassensors mit einem festen Medium vorliegt. Beispielsweise kann ein Schutzrohr eines Abgassensors, insbesondere eines Partikelsensors, mit Partikeln verstopft sein.

Es kann ferner vorgesehen sein, dass das mindestens eine überwachte Ereignis, eine Alterung des Abgassensors ist.

Es kann ferner vorgesehen sein, dass bei der Alterung des Abgassensors ein Modellparameter zur Berechnung einer dem Abgassensor zugeführten und/oder dem Abgassensor entzogenen Wärmemenge, insbesondere ein Parameter, der einen Heizerwiderstand beschreibt, angepasst wird.

Es kann ferner vorgesehen sein, dass die Bewertung, ob das mindestens eine überwachte Ereignis eingetreten ist, auf Basis des Vergleichs eines vorgegebenen Werts mit einem durch zeitliche Integration über eine Wärmeleistung gewonnenen Maß erfolgt. Es kann sich insbesondere um ein zeitlich und/oder energetisch normiertes Maß handeln. Es kann sich insbesondere um ein zeitlich und/oder energetisch normiertes zeitliches Integrals eines Quadrats einer Wärmeleistung handeln, wobei die Wärmeleistung insbesondere eine Differenz aus einer modellierten dem Abgassensor zugeführten Wärmeleistung und modellierten Wärmeverlustleistungen des Abgassensors ist.

Nachfolgend werden beispielhafte Ausführungsformen der Erfindung unter Bezugnahme auf die Zeichnung erläutert. In der Zeichnung zeigen:

Figur 1　　eine schematische Darstellung Abgassensors in einem Abgaskanal.
Figur 2　　ein Flussdiagramm einer Ausführungsform des erfindungsgemäßen Verfahrens.

Ausführungsformen

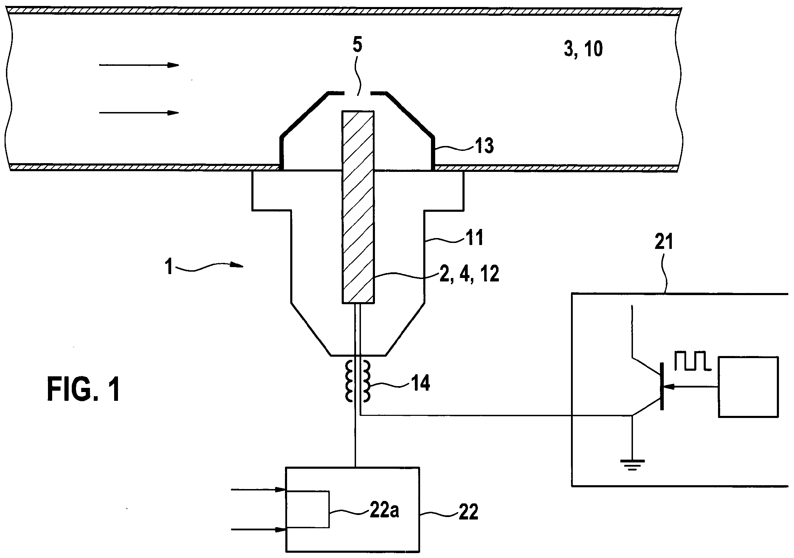

Figur 1 zeigt eine schematische Darstellung eines Abgassensors 1 in einem Abgaskanal 10 einer Brennkraftmaschine eines Kraftfahrzeugs.

Bei dem Abgassensor 1 kann es sich beispielsweise um einen Partikelsensor oder um eine Lambdasonde handeln. Der Abgassensor umfasst ein Gehäuse 11, ein keramisches Sensorelement 12 und ein Schutzrohr 13, das stirnseitig eine Gaszutrittsöffnung 5 aufweist.

In das keramische Sensorelement integriert ist eine Heizeinrichtung 2 und eine Einrichtung zur Temperaturmessung 4, die auf der Auswertung eines elektrischen Widerstands des Sensorelements 12 basiert.

Der Abgassensor 1 ist über eine dichte Durchführung 14 elektrisch kontaktiert.

Auf diese Weise steht er einerseits mit einer Heizspannungsversorgung 21 in Kontakt, anderseits mit einer Steuer- und Auswerteeinheit 22 in Kontakt. Die Steuer- und Auswerteeinheit 22 weist weitere elektronische Eingänge 22a auf, die mit weiteren Abgassensoren oder weiteren Recheneinheiten verbunden sein können. Beispielsweise können in der Steuer- und Auswerteeinheit 22 auf diese Weise Informationen vorliegen über die Abgassensortemperatur, die Umgebungstemperatur, die Strömungsgeschwindigkeit in der Umgebung, die chemische Zusammensetzung der Umgebung, eine Stärke und ein zeitlicher Verlauf eines den Abgassensor durchfließenden elektrischen Stroms und so weiter.

Die Heizspannungsversorgung 21 und die Steuer- und Auswerteeinheit 22 können auch gemeinsam in einem Abgassensorsteuergerät oder in einem Motorsteuergerät angeordnet sein.

Vorliegend ist in der Steuer- und Auswerteeinheit 22 ferner ein physikalisches Model hinterlegt mit dessen Hilfe aus den vorliegenden Informationen verschiedene Wärmemengen $Q$ und deren zeitliche Ableitungen $\dot{Q}$ errechnet werden. Im Einzelnen sind diese folgende Größen:

$\dot{Q}_{zuführ}$ - die Heizleistung die durch die elektrische Heizung zugeführt wird,
$\dot{Q}_{abführ}$ - die Wärmeleistung die durch die verschiedenen Abkühlungseffekte verloren wird, $\dot{Q}_{wärmespeicherung}$ - die Wärmeleistung die durch die Wärmespeicherkapazität des Abgassensors in den Materialien des Abgassensors gespeichert wird.

Die Heizleistung $\dot{Q}_{zuführ}$ wird durch die elektrischen Größen berechnet. $\dot{Q}_{zuführ}$ ist von der effektiven Heizerspannung und dem Heizerwiderstand abhängig in Form von: $\dot{Q}_{zuführ} = U_{HeizerEffektiv}{}^2/R_{Heizer}$. Hierbei ist $U_{HeizerEffektiv}$ der Effektivwert der Heizerspannung, die als pulsbreitenmoduliertes Signal vorliegt. $R_{Heizer}$ ist der Heizerwiderstand. Er wird in Abhängigkeit von der Abgassensortemperatur $T_{Sensor}$ berücksichtigt: $R_{Heizer} = f(T_{Sensor})$

Alternativ oder zusätzlich kann die Heizleistung die durch die elektrische Heizung zugeführt wird $\dot{Q}_{zuführ}$ je nach Verfügbarkeit der Signale auch mittels einem oder mehreren der folgenden Zusammenhänge bestimmt werden:

$$\dot{Q}_{zuführ} = I_{HeizerEffektiv}{}^2 \cdot R_{Heizer}$$

$$\dot{Q}_{zuführ} = U_{HeizerEffektiv} \cdot I_{HeizerEffektiv}$$

wobei $I_{HeizerEffektiv}$ der effektive Heizerstrom ist.

Die Wärmeleistung, die durch die verschiedenen Abkühlungseffekte verloren wird, $\dot{Q}_{abführ}$ berücksichtigt die Wärmeableitungsverluste (die Konduktion), die Wärmekonvektionsverluste, die Wärmestrahlungsverluste und elektrische Verluste in der Form

$$\dot{Q}_{abführ} = \dot{Q}_{konduktion} + \dot{Q}_{konvektion} + \dot{Q}_{strahlung} + \dot{Q}_{elektrischeVeruste}.$$

Die Wärmeableitungsverluste $\dot{Q}_{konduktion}$ werden in der Form:

$$\dot{Q}_{konduktion} = f(T_{Sensor}, T_{Abgasrohrwand})$$

modelliert.

Die Wärmekonvektionsverluste $\dot{Q}_{konvektion}$ werden im Form von:

$$\dot{Q}_{konvektion} = f(T_{Sensor}, T_{Abgas}, Abgasdurchströmung\ durch\ das\ Schutzrohr)$$

modelliert.

Die Wärmestrahlungsverluste $\dot{Q}_{strahlung}$ werden im Form von:

$$\dot{Q}_{strahlung} = f(T_{Sensor}{}^4, T_{Abgas}, Abgasdurchströmung\ durch\ das\ Schutzrohr)$$

modelliert.

Die elektrischen Verluste $\dot{Q}_{elektrischeVeruste}$ werden im Form von:

$$\dot{Q}_{elektrischeVeruste} = f(R_{Heizer}, R_{HeizerZuleitung}, R_{HeizerSchalter}, U_{HeizerEffektiv})$$

modelliert mit

$T_{Abgasrohrwand}$: Temperatur des Abgasrohrwands an der Stelle des Abgassensors
$T_{Abgas}$: Abgastemperatur an der Stelle des Abgassensors
$R_{HeizerZuleitung}$: elektrischer Widerstand der Heizerzuleitung
$R_{HeizerSchalter}$: elektrischer Widerstand des Heizerschalters

Die formal als Verlust auftretende Größe $\dot{Q}_{wärmespeicherung}$ ist die Rate der Änderung der im Abgassensor gespeicherten inneren Energie bzw. Wärmemenge.

$$\dot{Q}_{wärmespeicherung} = c_{Sensor} \cdot \frac{dT_{Sensor}}{dt},$$

wobei $c_{Sensor}$ die Wärmespeicherkapazität des Abgassensors ist.

Eine Anpassung der Wärmespeicherkapazität an ihren tatsächlichen Wert, zum Beispiel bei Alterung des Abgassensors kann vorgesehen sein.

Es ist vorgesehen, dass die verschiedenen Wärmeleistungen in einer Bilanzgleichung miteinander verglichen werden. Für den Fall, in dem alle auftretenden Wärmeleistungen in dem physikalischen Modell richtig erfasst sind, stellt diese Bilanzgleichung den Energieerhaltungssatz dar:

$\dot{Q}_{zuführ} = \dot{Q}_{abjührh} + \dot{Q}_{wärmespeicherung}$. Es kann in diesem Fall festgestellt werden, dass ein überwachtes Ereignis nicht eingetreten ist. Zu dem gleichen Ergebnis wird man auch gelangen, wenn die Gleichung nicht exakt erfüllt ist, aber doch näherungsweise erfüllt ist.

Ein anderes Ergebnis könnte darin bestehen, dass dem Abgassensor mehr Wärme zugeführt wurde, als es den ermittelten Wärmeverlusten entspricht: $\dot{Q}_{zuführ} > \dot{Q}_{abführ} + \boldsymbol{\dot{Q}_{wärmespeicherung}}$. In diesem Fall kann geschlossen werden, dass es einen zusätzlichen, im Modell nicht berücksichtigten Wärmeverlust gibt, wie er beispielsweise aus einer Überflutung des Abgassensors bei einer Watfahrt eines Kraftfahrzeuges erfolgen kann. Insbesondere kann auf ein solches Ereignis geschlossen werden.

Optional kann vorgesehen sein, dass der Schluss auf das Ereignis Watfahrt nur erfolgt, wenn die Diskrepanz zwischen dem Abgassensor zugeführten Wärmemengen und den ermittelten Wärmeverlusten stark und plötzlich erfolgt, beispielsweise um mehr als 10 % und oder innerhalb weniger als 10 Sekunden. Um das Ereignis Watfahrt sicher zu erkennen, kann als zusätzliches notwendiges Kriterium gefordert werden, dass das dynamische Verhalten, insbesondere die Änderung, der auf den beiden Seiten der Ungleichung aufgeführten physikalischen Größen $\dot{Q}_{zuführ} > \dot{Q}_{abführ} + \dot{Q}_{wärmespeicherung}$ korreliert, insbesondere jeweils einen raschen Anstieg zeigt.

Ein anderes Ergebnis könnte darin bestehen, dass dem Abgassensor weniger Wärme zugeführt wurde, als es den ermittelten Wärmeverlusten entspricht: $\boldsymbol{\dot{Q}_{zuführ}} < \dot{Q}_{abführ} + \dot{Q}_{wärmespeicherung}$. In diesem Fall kann geschlossen werden, dass die Wärmeverluste in Wirklichkeit geringer sind, als basierend auf dem Modell angenommen. Es kann insbesondere geschlossen werden, dass eine Verstopfung einer Gaszutrittsöffnung 5 des Abgassensors 1 mit einem festen Medium vorliegt. Um das Ereignis Verstopfung sicher zu erkennen, kann als zusätzliches notwendiges Kriterium gefordert werden, dass das dynamische Verhalten, insbesondere die Änderung, der auf den beiden Seiten der Ungleichung aufgeführten physikalischen Größen $\dot{Q}_{zuführ} > \dot{Q}_{abführ} + \boldsymbol{\dot{Q}_{wärmespeicherung}}$ nicht korreliert.

Im Laufe der Lebensdauer des Abgassensors 1 kommt es zu dessen Alterung, was sich insbesondere dahingehend auswirkt, dass der tatsächliche Wert des Widerstands $R_{Heizer}$ seiner Heizeinrichtung 2 nach und nach zunimmt. Wird in der Modellierung zur Berechnung der dem Abgassensor zugeführten Wärmemenge $\dot{Q}_{zuführ}$ weiterhin der zuvor verwendete Wert verwendet, kommt es dazu, dass die dem Abgassensor zugeführten Wärmemenge $\dot{Q}_{zuführ}$ fehlerhaft bestimmt wird, und zwar überbewertet oder unterbewertet wird, je nachdem auf welche Weise $\dot{Q}_{zuführ}$ berechnet wird ($\dot{Q}_{zuführ} = I_{HeizerEffektiv}{}^2 \cdot R_{Heizer}$ oder
$\dot{Q}_{zuführ} = \boldsymbol{U_{HeizerEffektiv}}{}^2 / R_{Heizer}$).

Zur Verbesserung des erfindungsgemäßen Verfahrens kann es daher vorgesehen sein, diese Alterung zu erkennen, zu berücksichtigen und/oder zu kompensieren.

Eine Berücksichtigung der Alterung des Abgassensors 1 kann beispielsweise erfolgen, indem auf Basis von Erfahrungswerten Modellparameter zur Berechnung einer dem Abgassensor 1 zugeführten und/oder dem Abgassensor 1 entzogenen Wärmemenge, insbesondere ein Parameter, der einen Heizerwiderstand $R_{Heizer}$ beschreibt, über die Lebensdauer des Abgassensors 1 nach und naczh verändert werden. Derartige Korrekturen können beispielsweise in Abhängigkeit von den Betriebsstunden des Abgassensors 1 erfolgen. Gegebenenfalls können bestimmte Betriebsbedingungen des Abgassensors 1, zum Beispiel Temperatur und/oder ähnliches zusätzlich berücksichtigt werden.

Alternativ kann eine Erkennung der Alterung des Abgassensors 1 aber auch - ganz im Sinne der Erfindung - durch ein Verfahren erfolgen, bei dem durch Auswertung von mindestens einer dem Abgassensor 1 in einem Zeitraum zugeführten und/oder dem Abgassensor 1 in dem Zeitraum entzogenen Wärmemenge, insbesondere unter Berücksichtigung einer während dem Zeitraum erfolgenden Änderung der durch den Abgassensor 1 gespeicherten Wärmemenge, festgestellt wird, ob eine Alterung des Abgassensors 1, insbesondere ein Anstieg des Heizerwiderstands $R_{Heizer}$ eingetreten ist.

Dies kann beispielsweise erfolgen, indem die Wärmeverluste
$\dot{Q}_{abführ} + \dot{Q}_{wärmespeicherung}$ mit der modellierten Heizleistung $\dot{Q}_{zuführ}$
über einen gewissen Zeitraum verglichen werden, insbesondere über einen längeren Zeitraum, beispielsweise mindestens 100s. Kommt es zu einer dauerhaften Abweichung zwischen den Wärmeverlusten $\dot{Q}_{abführ} + \dot{Q}_{wärmespeicherung}$ und der modellierten Heizleistung $\dot{Q}_{zuführ}$ so kann der Schluss erfolgen, dass eine Alterung des Abgassensors 1, insbesondere ein Anstieg des Heizerwiderstands $R_{Heizer}$ eingetreten ist.

Um den Fall "Alterung des Abgassensors" sicher von den Fällen "Watfahrt" und/oder Schutzrohrverstopfung unterscheiden zu können, können zusätzliche Kriterien herangezogen werden.

So ist der Schluss auf einen gealterten Abgassensorenor 1 insbesondere nur zulässig, wenn eine Abweichung zwischen den Wärmeverlusten $\dot{Q}_{abführ} + \dot{Q}_{wärmespeicherung}$ und der modellierten Heizleistung $\dot{Q}_{zuführ}$ allmählich auftritt, beispielsweise höchstens um einige Prozent über hundert Betriebsstunden. Im Fall einer Watfahrt tritt eine Abweichung zwischen den Wärmeverlusten $\dot{Q}_{abführ} + \dot{Q}_{wärmespeicherung}$ und der modellierten Heizleistung $\dot{Q}_{zuführ}$ hingegen innerhalb einer sehr kurzen Zeit auf, beispielsweise innerhalb einiger Sekunden. Zusätzlich oder alternativ kann vogesehen sein, dass der Schluss auf einen gealterten Abgassensor 1 nur zulässig ist, wenn die Abweichung auch in Situationen auftritt, in denen eine Watfahrt physikalisch nicht möglich ist, zum Beispiel bei hoher Fahrzeuggeschwindigkeit, beispielsweise mindestens 50km/h.

Zusätzlich oder alternativ kann vogesehen sein, dass der Schluss auf einen gealterten Sensor insbesondere dann nicht zulässig ist, wenn eine ausgeprägte Abhängigkeit der Abweichung zwischen den Wärmeverlusten $\dot{Q}_{abführ} + \dot{Q}_{wärmespeicherung}$ und der modellierten Heizleistung $\dot{Q}_{zuführ}$ von der Abgasgeschwindigkeit am Ort des Abgassensors 1 feststellbar ist. In diesem Fall ist gegebenenfalls von einer Verstopfung einer Gaszutrittsöffnung 5 des Abgassensors 1 mit einem festen Medium auszugehen.

Einer Erkennung der Alterung des Abgassensors 1 kann sich deren Berücksichtigung durch adäquate Anpassung eines Modellparameter zur Berechnung einer dem Abgassensor 1 zugeführten und/oder dem Abgassensor 1 entzogenen Wärmemenge, insbesondere eines Parameters, der einen Heizerwiderstand $R_{Heizer}$ beschreibt, anschließen.

Ob die Gleichung $\dot{Q}_{zuführ} = \dot{Q}_{abführ} + \dot{\boldsymbol{Q}}_{\boldsymbol{warmespeicherung}}$ ausreichend exakt erfüllt ist, also nur kleine und/oder nur kurze Abweichungen autreten, oder ob Abweichungen den Schluss erlauben, dass gewisse Ereignisse eingetreten sind oder in Abhängigkeit von weiteren Kriterien eingetreten sein könnten, kann einerseits aus dem absoluten Betrag der eingetretenen Abweichung geschlossen werden.

Allerdings ist ein solches Maß fehlerbehaftet, da die Größe der Abweichung von äußerlichen Bedingungen, denen der Abgassensor 1 ausgesetzt ist (zum Beispiel Abgastemperatur, Abgasstrangwandtemperatur, Abgasgeschwindigkeit, Abgasbeschleunigung und Abgasmassenstrom) und ferner von Betriebsbedingungen des Abgassensors 1 (zum Beispiel Sensortemperatur, Spannungstastverhältnis des Sensorheizers, Sensorspannung) abhängen kann.

Ein objektives Maß dafür, ob die Gleichung $\dot{Q}_{zuführ} = \dot{Q}_{abführ} + \dot{Q}_{wärmespeicherung}$ ausreichend exakt erfüllt ist kann wie folgt bereitgestellt werden:

Die Größe $\Delta\dot{Q}_{Abweihung}$ wird errechnet aus

$$\Delta\dot{Q}_{Abweichung} = (\dot{Q}_{abführ} + \dot{Q}_{wärmespeicherung})_{modelliert} - \dot{Q}_{zuführ}$$

und kann ein negatives oder positives Vorzeichen aufweisen.

Es wird ein verstärktes und energetisch normiertes Maß $\Delta\dot{Q}_{Abweichung, Verstärkt, Normiert}$ gebildet.

$$\Delta\dot{Q}_{Abweichung,Verstärkt,Normiert} = \frac{\Delta\dot{Q}_{Abweichung}^{2}}{(\dot{Q}_{abführ} + \dot{Q}_{wärmespeicherung})_{modelliert}}$$

Dieses wird durch zeitliche Integration und zeitliche Normierung auf gewisse Zeiträume angewandt:

$$\Delta Q_{Abweichung,Verstärkt,Normiert} = \int_{t_1}^{t_2} \Delta\dot{Q}_{Abweichung,Verstärkt,Normiert} \cdot dt$$

$$\Delta Q_{Abweichung,Verstärkt,Normiert,Zeitnormiert} = \frac{\Delta Q_{Abweichung,Verstärkt,Normiert}}{\Delta t}$$

wobei

$$\Delta t = (t_a - t_1) + (t_c - t_b) + (t_e - t_d) + \cdots + (t_2 - t_f)$$

und

$$[t_1, t_2] = \{[t_1, t_a], [t_b, t_c], [t_d, t_e] \dots [t_f, t_2]\}$$

Als ein solches objektives Maß $\Delta Q_{obj}$ kann $\Delta Q_{Abweichung, Verstärkt, Normiert, Zeitnormiert}$ bereits verwendet werden. Um eine bessere Robustheit zu erstellen, kann auch ein Mittelwert über eine Vielzahl von Zeitrasterproben gebildet werden:

$$\Delta Q_{Abweichung, Verstärkt, Normiert, Zeitnormiert, Mittelwert}$$
$$= \frac{\int_{t_1}^{t_2} \Delta Q_{Abweichung, Verstärkt, Normiert, Zeitnormiert} \cdot dt}{Anzahl\ der\ Zeitrasterproben\ (\Delta t)}$$

Das so erhaltene objektive Maß $\Delta Q_{obj}$ wird schlussendlich noch mit einer vorgegebenen Schwelle verglichen, um objektiv zu bestimmen, ob das überwachte Ereignis eingetreten ist oder ob es nicht eingetreten ist.

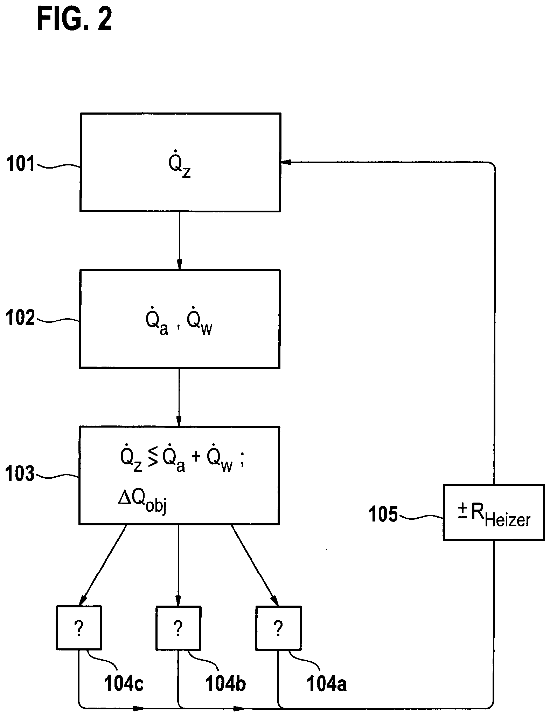

Figur 2 zeigt nochmals beispielhaft Schritte des erfindungsgemäßen Verfahrens. In einem ersten Schritt 101 wird eine elektrische Heizleistung Qz des Abgassensors 1 erfasst. In einem zweiten Schritt 102 werden dem Abgassensor 1 entzogene Wärmemengen $\dot{Q}a$, eine Änderung der durch den Abgassensor 1 gespeicherten Wärmemenge $Qw$ erfasst. In einem dritten Schritt 103 erfolgt Vergleich der Wärmemengen. Ferner wird wie bereits geschildert, ein objektives Maß $\Delta Q_{obj}$ errechnet, dass beschreibt, inwiefern die Gleichung $\dot{Q}_{zuführ} = Q_{abführ} + \dot{Q}_{wärmespeicherung}$ exakt erfüllt ist oder inwiefern Abweichungen vorliegen.

Nachfolgend wird in den Schritten 104a und 104b und 104c auf Basis des Vergleiches, gegebenenfalls unter Berücksichtigung weiterer Kriterien und gegebenenfalls unter Berücksichtigung des objektiven Maßes $\Delta Q_{obj}$ und eines vorgegebenen Werts, wie oben beschrieben, entschieden, ob eine Verstopfung des Schutzrohrs 13 vorliegt oder nicht und es wird zusätzlich oder alternativ entschieden ob eine Überflutung des Abgassensors 1 vorliegt oder nicht und es wird zusätzlich oder alternativ entschieden ob eine Alterung des Abgassensors 1 vorliegt oder nicht. Das Verfahren kann nachfolgend wieder bei Schritt 101 beginnen. Gegebenenfalls, insbesondere falls eine Sensoralterung zuvor festgestellt wurde, kann eine Anpassung von Modellparametern, insbesondere eines Parameters, der einen Heizerwiderstand $R_{Heizer}$ beschreibt, im Schritt 105 vorgenommen werden.

**Patentansprüche**

1. Verfahren zur Überwachung eines Abgassensors (1) bei dem durch Auswertung von dem Abgassensor (1) in einem Zeitraum zugeführten und/oder dem Abgassensor (1) in dem Zeitraum entzogenen Wärmemengen festgestellt wird, ob mindestens ein überwachtes Ereignis eingetreten ist, **dadurch gekennzeichnet, dass** die Auswertung anhand einer Energiebilanzgleichung oder anhand des Energieerhaltungssatzes oder anhand der zeitlichen Ableitung einer Energiebilanzgleichung oder anhand der zeitlichen Ableitung des Energieerhaltungssatzes erfolgt und dass bei oder vor der Auswertung folgende Wärmemengen separat voneinander ermittelt und berücksichtigt werden:

- Eine Wärmableitung zwischen dem Abgassensor (1) und seiner Umgebung (3),
- eine Wärmekonvektion zwischen dem Abgassensor (1) und seiner Umgebung (3) und
- eine Wärmestrahlung zwischen dem Abgassensor (1) und seiner Umgebung (3);
und dass die Summe dieser Wärmemengen zuzüglich einer während dem Zeitraum erfolgenden Änderung der durch den Abgassensor (1) gespeicherten Wärmemenge, welche durch eine von dem Abgassensor (1) umfasste Einrichtung zur Temperaturmessung (4) erfasst wird, mit einer Heizleistung einer elektrischen Heizeinrichtung (2) des Abgassensors verglichen wird und daraus festgestellt wird, ob das mindestens eine überwachte Ereignis eingetreten ist,
wobei die Wärmengen zumindest teilweise unter Zugrundelegen eines physikalischen Modells des Abgassensors (1) und seiner Umgebung (3) aus weiteren gemessenen Größen, darunter einer Abgastemperatur, ermittelt werden, wobei in dem physikalischen Modell das Auftreten des überwachten Ereignisses nicht berücksichtigt ist;
wobei in dem Fall, in dem das überwachte Ereignis einer zusätzlichen Auskühlung des Abgassensors (1) entspricht, so wie es beispielsweise bei einer Überflutung des Abgassensors der Fall ist, auf das Auftreten des überwachten Ereignisses geschlossen wird, wenn die elektrische Heizleistung größer ist als die Summe der berücksichtigten Wärmemengen;
und wobei in dem Fall, in dem das überwachte Ereignis damit einhergeht, dass eine an

sich zu erwartende Auskühlung des Abgassensors (1) nicht auftritt, so wie es beispielsweise bei einer Verstopfung einer Gaszutrittsöffnung des Abgassensors der Fall ist, auf das Auftreten des überwachten Ereignisses geschlossen wird, wenn die elektrische Heizleistung kleiner ist als die Summe der berücksichtigten Wärmemengen.

**2.** Verfahren nach Anspruch 1 , **dadurch gekennzeichnet, dass** das mindestens eine überwachte Ereignis eine Überflutung des Abgassensors (1) mit einem flüssigen Medium ist.

**3.** Verfahren nach Anspruch 1 , **dadurch gekennzeichnet, dass** das mindestens eine überwachte Ereignis die Verstopfung einer Gaszutrittsöffnung (5) des Abgassensors (1) mit einem festen Medium ist.

**4.** Verfahren nach Anspruch 1 , **dadurch gekennzeichnet, dass** das mindestens eine überwachte Ereignis, eine Alterung des Abgassensors (1) ist.

**5.** Verfahren nach einem der Ansprüche 1 bis 4, **dadurch gekennzeichnet, dass** bei Alterung des Abgassensors Modellparameter zur Berechnung einer dem Abgassensor zugeführten und/oder dem Abgassensor entzogenen Wärmemenge, ein Parameter, der einen Heizerwiderstand beschreibt, angepasst wird.

**6.** Verfahren nach einem der Ansprüche 1 bis 5, **dadurch gekennzeichnet, dass** die Bewertung, ob das mindestens eine überwachtes Ereignis eingetreten ist auf Basis des Vergleichs eines vorgegebenen Werts mit einem durch zeitliche Integration über eine Wärmeleistung gewonnenen Maß erfolgt.

**7.** Motorsteuergerät (21,22), welches ausgebildet ist und Mittel umfasst, jeden Schritt des Verfahrens nach einem der vorangehenden Ansprüche durchzuführen.

**8.** Computerprogramm, umfassend Befehle, die bewirken, dass die Vorrichtung des Anspruchs 7 die Verfahrensschritte nach einem der Ansprüche 1 bis 6 ausführt.

**9.** Elektronisches Speichermedium, auf welchem ein Computerprogramm nach Anspruch 8 gespeichert ist.

**Claims**

**1.** Method for monitoring an exhaust gas sensor (1), in which it is determined whether at least one monitored event has occurred by evaluating heat quantities supplied by the exhaust gas sensor (1) in a period of time and/or withdrawn from the exhaust gas sensor (1) in the period of time, **characterized in that** the evaluation is carried out on the basis of an energy balance equation or on the basis of the energy conservation law or on the basis of the temporal derivative of an energy balance equation or on the basis of the temporal derivative of the energy conservation law, and **in that** the following heat quantities are determined and taken into account separately from one another during or before the evaluation:

- heat dissipation between the exhaust gas sensor (1) and its surroundings (3),
- heat convection between the exhaust gas sensor (1) and its surroundings (3), and
- heat radiation between the exhaust gas sensor (1) and its surroundings (3);

and **in that** the sum of these heat quantities plus a change in the heat quantity stored by the exhaust gas sensor (1), which takes place during the period of time and is detected by a device for measuring temperature (4) that is included in the exhaust gas sensor (1), is compared with a heating power of an electrical heating device (2) of the exhaust gas sensor and it is determined from this whether the at least one monitored event has occurred, wherein the heat quantities are determined from other measured variables, including an exhaust gas temperature, at least in part taking a physical model of the exhaust gas sensor (1) and its surroundings (3) as a basis, wherein the occurrence of the monitored event is not taken into account in the physical model;

wherein, if the monitored event corresponds to additional cooling of the exhaust gas sensor (1), as is the case, for example, when the exhaust gas sensor is flooded, the occurrence of the monitored event is inferred when the electrical heating power is greater than the sum of the heat quantities taken into account;

and wherein, if the monitored event is associated with
expected cooling of the exhaust gas sensor (1) not occurring, as is the case, for example, when a gas inlet opening of the exhaust gas sensor is blocked, the occurrence of the monitored event is inferred when the electrical heating power is less than the sum of the heat quantities taken into account.

2. Method according to Claim 1, **characterized in that** the at least one monitored event is flooding of the exhaust gas sensor (1) with a liquid medium.

3. Method according to Claim 1, **characterized in that** the at least one monitored event is the blockage of a gas inlet opening (5) of the exhaust gas sensor (1) with a solid medium.

4. Method according to Claim 1, **characterized in that** the at least one monitored event is ageing of the exhaust gas sensor (1).

5. Method according to one of Claims 1 to 4, **characterized in that**, in the event of ageing of the exhaust gas sensor, a model parameter for calculating a heat quantity supplied to the exhaust gas sensor and/or withdrawn from the exhaust gas sensor, a parameter describing a heater resistance, is adapted.

6. Method according to one of Claims 1 to 5, **characterized in that** the assessment of whether the at least one monitored event has occurred is made on the basis of the comparison of a predefined value with a measure obtained by temporal integration over a heating power.

7. Engine control unit (21,22) which is designed and comprises means to carry out each step of the method according to one of the preceding claims.

8. Computer program comprising instructions that cause the device in Claim 7 to carry out the method steps according to one of Claims 1 to 6.

9. Electronic storage medium on which a computer program according to Claim 8 is stored.


**Revendications**

1. Procédé de surveillance d'un capteur de gaz d'échappement (1), avec lequel la survenance d'au moins un événement surveillé est constatée par évaluation des quantités de chaleur acheminées au capteur de gaz d'échappement (1) dans un intervalle de temps et/ou soutirées du capteur de gaz d'échappement (1) dans l'intervalle de temps, **caractérisé en ce que** l'évaluation s'effectue à l'aide d'une équation de bilan énergétique ou à l'aide du principe de conservation de l'énergie ou à l'aide de la dérivée temporelle d'une équation de bilan énergétique ou à l'aide de la dérivée temporelle du principe de conservation de l'énergie, et **en ce que** les quantités de chaleur suivantes sont déterminées et prises en compte séparément les unes des autres lors de ou avant l'évaluation :

   - une dissipation de chaleur entre le capteur de gaz d'échappement (1) et son environnement (3),
   - une convection thermique entre le capteur de gaz d'échappement (1) et son environnement (3) et
   - un rayonnement thermique entre le capteur de gaz d'échappement (1) et son environnement (3) ;

   et **en ce que** la somme de ces quantités de chaleur, plus une modification se produisant pendant la période de la quantité de chaleur accumulée par le capteur de gaz d'échappement (1), qui est détectée par un dispositif de mesure de température (4) compris dans le capteur de gaz d'échappement (1), est comparée à une puissance de chauffage d'un dispositif de chauffage électrique (2) du capteur de gaz d'échappement et, à partir de cela, il est constaté si l'au moins un événement surveillé est survenu, les quantités de chaleur étant déterminées au moins en partie sur la base d'un modèle physique du capteur de gaz d'échappement (1) et de son environnement (3) à partir de grandeurs mesurées supplémentaires, dont une température des gaz d'échappement, la survenance de l'événement surveillé n'étant pas prise en compte dans le modèle physique ;
   dans le cas où l'événement surveillé correspond à un refroidissement supplémentaire du capteur de gaz d'échappement (1), comme c'est par exemple le cas lors d'une submersion du capteur de gaz d'échappement, la survenance de l'événement surveillé étant conclue lorsque la puissance de chauffage électrique est supérieure à la somme des quantités de chaleur prises en compte ;
   et dans le cas où l'événement surveillé s'accompagne du fait qu'un refroidissement du capteur de gaz d'échappement (1), qui est attendu en soi, ne se produit pas, comme c'est par exemple le cas lors d'une obstruction d'une ouverture d'arrivée de gaz du capteur de gaz d'échappement, la survenance de l'événement surveillé étant conclue lorsque la puissance de chauffage électrique est inférieure à la somme des quantités de chaleur prises en compte.

2. Procédé selon la revendication 1, **caractérisé en ce que** l'au moins un événement surveillé est une submersion du capteur de gaz d'échappement (1) par un milieu liquide.

3. Procédé selon la revendication 1, **caractérisé en ce que** l'au moins un événement surveillé est l'obstruction d'un orifice d'arrivée de gaz (5) du capteur de gaz d'échappement (1) par un milieu solide.

4. Procédé selon la revendication 1, **caractérisé en ce que** l'au moins un événement surveillé est un vieillissement du capteur de gaz d'échappement (1).

5. Procédé selon l'une des revendications 1 à 4, **caractérisé en ce que**, lors du vieillissement du capteur de gaz d'échappement, des paramètres de modèle destinés au calcul d'une quantité de chaleur acheminée au capteur de gaz d'échappement et/ou soutirée du capteur de gaz d'échappement, un paramètre qui décrit une résistance de chauffage est adapté.

6. Procédé selon l'une des revendications 1 à 5, **caractérisé en ce que** l'évaluation de la survenance ou non de l'au moins un événement surveillé s'effectue sur la base de la comparaison d'une valeur prédéfinie avec une mesure obtenue par intégration temporelle sur une puissance thermique.

7. Contrôleur de moteur (21, 22), lequel est configuré et comprend des moyens pour exécuter chaque étape du procédé selon l'une des revendications précédentes.

8. Programme informatique, comprenant des instructions qui ont pour effet que le dispositif selon la revendication 7 exécute les étapes du procédé selon l'une des revendications 1 à 6.

9. Support de stockage électronique sur lequel est enregistré un programme informatique selon la revendication 8.

FIG. 1

# FIG. 2

101 — $\dot{Q}_z$

102 — $\dot{Q}_a \, , \dot{Q}_w$

103 — $\dot{Q}_z \lesseqgtr \dot{Q}_a + \dot{Q}_w \; ;$
$\Delta Q_{obj}$

105 — $\pm R_{Heizer}$

? 104c  ? 104b  ? 104a